# EUROPEAN PATENT SPECIFICATION

(11) **EP 1 882 714 B1**
(45) Date of publication and mention of the grant of the patent: **08.11.2017**
(21) Application number: 06746340.6
(22) Date of filing: 12.05.2006
(51) Int. Cl.: C08J 5/04, C08G 59/22, C08G 59/62, C08G 59/24, C08J 5/24

(54) **METHOD FOR PRODUCING FIBER-REINFORCED THERMALLY MOLTEN EPOXY RESIN**
VERFAHREN ZUR HERSTELLUNG VON FASERVERSTÄRKTEM THERMISCH GESCHMOLZENEM EPOXIDHARZ
PROCÉDÉ SERVANT À PRODUIRE UNE RÉSINE ÉPOXYDE THERMIQUEMENT FONDUE RENFORCÉE PAR DES FIBRES

(30) Priority: 18.05.2005 JP 2005146101
(43) Date of publication of application: 30.01.2008
(73) Proprietor: Nagase ChemteX Corporation, Osaka-shi, Osaka 550-8668 (JP); NITTO BOSEKI CO., LTD., Fukushima-shi, Fukushima 960-8161 (JP)
(72) Inventor: NISHIDA, Hirofumi c/o NAGASE CHEMTEX CORPORATION, Hyogo; 6794124 (JP); HIRAYAMA, Norio c/o NITTO BOSEKI CO., LTD., Koriyama-shi, Fukushima;9638061 (JP)
(74) Representative: Vossius & Partner Patentanwälte Rechtsanwälte mbB
(86) International application number: PCT/JP2006/309543
(87) International publication number: WO 2006/123577

(56) References cited:
- EP-A1- 0 326 311
- JP-A- 2004 059 836
- JP-A- 2004 059 836
- JP-A- 2004 083 855
- JP-A- 2004 339 499
- JP-A- 2005 325 331
- US-A- 4 786 669

## Description

### TECHNICAL FIELD

The present invention relates to a method for producing a fiber-reinforced thermally meltable epoxy resin. More specifically, the present invention relates to a method for producing a fiber-reinforced thermally meltable epoxy resin using a thermally meltable epoxy resin produced using a bifunctional compound having a fluorene skeleton to have a high melting initiation temperature.

### BACKGROUND ART

A fiber-reinforced thermoplastic resin (FRTP) is a composite material obtained by reinforcing a thermoplastic resin with reinforcing fibers to increase its strength, and is reusable, recyclable, and fabricable, whereas a fiber-reinforced thermosetting resin obtained by reinforcing a thermosetting resin with reinforcing fibers is difficult to reuse, recycle, and fabricate. For this reason, the fiber-reinforced thermoplastic resin has been used for various purposes in recent years. Such an FRTP is generally produced by kneading a thermoplastic resin with reinforcing fibers and molding the thus obtained mixture.

However, it has been known that there are some problems caused by kneading a thermoplastic resin with reinforcing fibers. More specifically, in order to impregnate the reinforcing fibers with the thermoplastic resin having a high molecular weight, it is necessary to melt the thermoplastic resin at a high temperature and a high pressure to ensure the flowability of the thermoplastic resin and the wettability of the reinforcing fibers with the thermoplastic resin. As a result, the reinforcing fibers such as glass fibers are damaged due to high pressure and high temperature, and therefore the reinforcing fibers in a composite material are cut into staple fibers. This reduces the strength of the fibers themselves, and finally deteriorates the strength properties of a molded FRTP using the composite material. Further, since the thermoplastic resin has a high molecular weight, the reinforcing fibers are not sufficiently impregnated with the thermoplastic resin so that voids occur at the interface between the thermoplastic resin and the reinforcing fibers. Further, since the thermoplastic resin is kept at a high temperature for a long period of time, the thermoplastic resin is disadvantageously decomposed or deteriorated. Further, the production of FRTP requires a much larger amount of energy for molding as compared to the production of a composite material composed of a thermosetting resin and reinforcing fibers. Further, since the impregnation of the reinforcing fibers with the thermoplastic resin is carried out after the completion of polymerization of the thermoplastic resin, a chemical reaction between the thermoplastic resin and a coupling agent or the like of the reinforcing fibers does not occur, and therefore, chemical adhesion does not occur at the interface between the reinforcing fibers and the thermoplastic resin, thereby significantly reducing the efficiency of combining the reinforcing fibers and the thermoplastic resin.

On the other hand, there is known a method for producing a fiber-reinforced thermally meltable FRP by polymerizing reactive compounds after mixing the reactive compounds with reinforcing fibers (see, for example, Patent Document 1) . The Patent Document 1 discloses a general combination of reactive compounds that can be linearly polymerized by polyaddition reaction or polycondensation reaction. More specifically, a polymerization product of a naphthalene-type epoxy resin and bisphenol A is used. A thermally meltable FRP obtained by this method can be melted by heating and is therefore reusable, recyclable, and fabricable, and in addition, the viscosity of a mixture of the reactive compounds is kept low during the impregnation of the reinforcing fibers with the reactive compounds. Although this method is very useful to solve the above problems of the conventional composite material using a thermoplastic resin, it is to be desired that the heat resistance of the thermally meltable FRP can be controlled from the viewpoint of expanding its applications. It is to be noted, however, that there is no description about it in the Patent Document 1.

Patent Document 1: WO 2004/060981

### DISCLOSURE OF THE INVENTION

### Problem to be salved by the Invention

In view of the present circumstances described above, it is an object of the present invention to provide a method for producing a fiber-reinforced thermally meltable epoxy resin having excellent heat resistance using a thermally meltable epoxy resin having a high melting initiation temperature and a fiber-reinforced plastic produced by the method.

### Means for Solving the Problem

In order to achieve the above object, the present invention is directed to a method for producing a fiber-reinforced thermally meltable epoxy resin, comprising the steps of: (I) mixing a compound (A) having two epoxy groups in one molecule and a compound (B) having two phenolic hydroxyl groups in one molecule with reinforcing fibers; and (II) linearly polymerizing the compounds (A) and (B) mixed with the reinforcing fibers by polyaddition reaction, wherein at least a part of the compound (A) and/or at least a part of the compound (B) are/is a compound having a fluorene skeleton, and the compound (A) and the compound (B) are mixed in such a ratio that the number of moles of epoxy groups in the compound (A) is 0.9 to 1.1 times the number of moles of phenolic hydroxyl groups in the compound (B).

The present invention is also directed to a fiber-reinforced plastic produced by the production method described above.

### Effect of the Invention

According to the production method of the present invention, it is possible to obtain a thermally meltable epoxy resin having a high melting initiation temperature and to produce a fiber-reinforced thermally meltable epoxy resin having excellent heat resistance using the thermally meltable epoxy resin.

Further, the viscosity of a mixture of the reactive compounds is kept low during mixing of the reactive compounds with the reinforcing fibers, and therefore the wettability of the reinforcing fibers with the reactive compounds is excellent and voids do not remain in the fiber bundles, thereby enabling a high-quality composite material to be obtained. This makes it possible to easily produce a molded product of the composite material without defects such as voids even when the molded product has a complicated shape.

Further, the reinforcing fibers are first wetted with the low molecular reactive compounds, and then the reactive compounds are polymerized in a state where the reinforcing fibers are wet with the reactive compounds, and therefore a chemical reaction between a resin formed from the reactive compounds and a coupling agent of the reinforcing fibers is sufficiently carried out so that the resin is strongly bound to the reinforcing fibers.

Further, as described above, since the molecular weight of the thermally meltable epoxy resin is kept low during mixing with the reinforcing fibers, unlike the conventional FRTP, the reinforcing fibers are not damaged and therefore a reduction in the strength of the reinforcing fibers does not occur. In addition, reaction proceeds in a state where the reinforcing fibers are wet with the resin, and therefore strong chemical bonds are formed at the interface between the resin and the reinforcing fibers.

### BRIEF DESCRIPTION OF THE DRAWINGS

Fig. 1 is a graph that shows a result of viscoelasticity test of a fiber-reinforced thermally meltable resin of Example 1; and
Fig. 2 is a graph that shows a result of viscoelasticity test of FRP of Comparative Example 1.

### BEST MODE FOR CARRYING OUT THE INVENTION

According to the present invention, a reinforcing fiber-containing thermally meltable epoxy resin is obtained by mixing compounds (A) and (B) forming a thermally meltable epoxy resin (hereinafter, both of them are also simply referred to as "reactive compounds") with reinforcing fibers in a state where the reactive compounds have not yet been substantially polymerized to impregnate the reinforcing fibers with the reactive compounds (step (I)) and then polymerizing the compounds (A) and (B) which are mixed with and impregnated into the reinforcing fibers (step (II)). Both of the compound (A) and the compound (B) are preferably in a molten state in the step (I). The compound (A) and the compound (B) have to be in a molten state in at least the step (II) for polymerization, but they do not always have to be in a molten state in the step (I) as long as they can be mixed with the reinforcing fibers because the reinforcing fibers can be sufficiently impregnated with the compound (A) and the compound (B) in the step (II). Hereinbelow, these steps will be described in order. It is to be noted that in this specification, the thermally meltable epoxy resin refers to a liner polymer or copolymer derived from an epoxy compound or a compound that can react with an epoxy compound and an epoxy compound.

In the present invention, at least a part of the compound (A) having two epoxy groups in one molecule and/or at least a part of the compound (B) having two phenolic hydroxyl groups in one molecule are/is a compound having a fluorene skeleton.

An example of the compound (A) having a fluorene skeleton includes a compound (A1) having a structure in which fluorene has a glycidyl group-containing compound as a substituent, such as a compound having a structure in which fluorene has two compounds, each having one glycidyl group, as substituents. Such a compound (A1) can be represented by the following general formula (1):

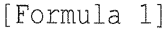

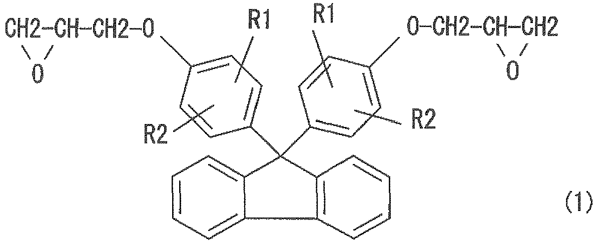

In the formula 1, R1 and R2 are the same or different and each represents a hydrogen atom, a C1 to C5 saturated or unsaturated linear or cyclic hydrocarbon group which may have a substituent; (e.g., methyl, ethyl, t-butyl, or cyclohexyl), or an aryl group which may have a substituent; (e.g., phenyl or tolyl). The substituent R1 can be ortho or meta to the glycidyl group, and the substituent R2 can also be ortho or meta to the glycidyl group. Further, two R1s may be the same or different, and two R2s may be the same or different. Further, the positions of the two R1s may be the same or different with each other, and the positions of the two R2s may be the same or different with each other. Specific examples of such a compound (A1) include bisphenol fluorene type epoxy resins, biscresol fluorene type epoxy resins, a compound in which two R1s are hydrogen atoms and two R2s are phenyl groups, and bis(diphenol) fluorene type epoxy resins. These compounds can be used singly or in combination of two or more of them. Among them, biscresol fluorene type epoxy resins are preferred.

Examples of the compound (A) having two epoxy groups in one molecule other than those having a fluorene skeleton include: mononuclear aromatic diepoxy compounds having one benzene ring, such as catechol diglycidyl ether, resorcin diglycidyl ether, t-butylhydroquinone diglycidyl ether, and phthalic acid diglycidyl ether; alicyclic epoxy compounds such as dimethylolcyclohexane diglycidyl ether, 3,4-epoxycyclohexenylmethyl-3,4-epoxycyclohexenyl carboxylate, and limonene dioxide; bisphenol type epoxy compounds such as bis(4-hydroxyphenyl)methane diglycidyl ether, 1,1-bis(4-hydroxyphenyl)ethane diglycidyl ether, and 2,2-bis(4-hydroxyphenyl)propane diglycidyl ether and partially condensed oligomer mixtures thereof (bisphenol type epoxy resins); 3,3',5,5'-tetramethylbis(4-hydroxyphenyl)methane diglycidyl ether; and 3,3',5,5'-tetramethylbis(4-hydroxyphenyl)ether diglycidyl ether. It is to be noted that epoxy resins which are crystalline when used alone and which are solid at room temperature but are melted and become liquid at a temperature of 200°C or less, such as hydroquinone diglycidyl ether, methylhydroquinone diglycidyl ether, 2,5-di-t-butylhydroquinone diglycidyl ether, biphenyl- or tetramethylbiphenyl-type epoxy resins can be used.

An example of the compound (B) having a fluorene skeleton includes a compound (B1) having a structure in which fluorene has a phenolic hydroxyl group-containing compound as a substituent, such as a compound having a structure in which fluorene has two compounds, each having one phenolic hydroxyl group, as substituents. Such a compound (B1) can be represented by the following general formula (2):

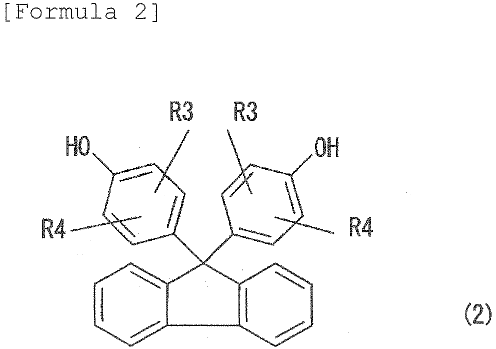

In the formula 2, R3 and R4 are the same or different and each represents a hydrogen atom, a C1 to C5 saturated or unsaturated linear or cyclic hydrocarbon group which may have a substituent; (e.g., methyl, ethyl, t-butyl or cyclohexyl), or an aryl group which may have a substituent; (e.g., a phenyl group or a tolyl group). The substituent R3 can be ortho or meta to the glycidyl group, and the substituent R4 can also be ortho or meta to the glycidyl group. Further, two R3s may be the same or different, and two R4s may be the same or different. Further, the positions of the two R3s may be the same or different with each other, and the positions of the two R4s may be the same or different with each other. Specific examples of such a compound (B1) include bisphenols such as bisphenol fluorene and biscresol fluorene, a compound in which two R3s are hydrogen atoms and two R4s are phenyl groups, and bis(phenylphenol) fluorene. These compounds can be used singly or in combination of two or more of them. Among them, biscresol fluorene is preferred.

Examples of the compound (B) having two phenolic hydroxyl groups in one molecule other than those having a fluorene skeleton include mononuclear aromatic dihydroxy compounds having one benzene ring such as catechol, resorcin, hydroquinone, methylhydroquinone, t-butylhydroquinone, and 2,5-di-t-butylhydroquinone, 2,2-bis(4-hydroxyphenyl)propane (bisphenol A), 1,1-bis(4-hydroxyphenyl)ethane (bisphenol AD), bis(hydroxyphenyl)methane (bisphenol F), compounds having a condensed ring such as dihydroxynaphthalene, and allyl group-containing bifunctional phenol compounds such as diallyl resorcin, diallyl bisphenol A, and triallyl dihydroxybiphenyl.

Examples of a combination of the reactive compounds include: (1) a combination of the compound (A1) the compound (A) other than those having a fluorene skeleton, the compound (B1), and the compound (B) other than those having a fluorene skeleton; (2) a combination of the compound (A1), the compound (A) other than those having a fluorene skeleton, and the compound (B) other than those having a fluorene skeleton; (3) a combination of the compound (A) other than those having a fluorene skeleton, the compound (B1), and the compound (B) other than those having a fluorene skeleton; (4) a combination of the compound (A1) and the compound (B1); (5) a combination of the compound (A1) and the compound (B) other than those having a fluorene skeleton; and (6) a combination of the compound (A) other than those having a fluorene skeleton and the compound (B1). Among these combinations, the combination (6) is preferred mainly from the economic viewpoint.

The amount of the compound(s) having a fluorene skeleton is preferably 7 mol% or more, more preferably 15 mol% or more with respect to the total amount of the compound (A) and the compound (B). If the amount of the compound(s) having a fluorene skeleton is less than 7 mol%, there is a case where an obtained fiber-reinforced thermally meltable epoxy resin does not have sufficient heat resistance.

In the present invention, the compound (A) and the compound (B) are mixed in such a ratio that the number of moles of epoxy groups in the compound (A) is 0.9 to 1.1 times, preferably 0.95 to 1.05 times the number of moles of phenolic hydroxyl groups in the compound (B) . If the ratio of the number of moles of epoxy groups in the compound (A) to the number of moles of phenolic hydroxyl groups in the compound (B) is outside the above range, there is a disadvantage that the molecular weight of a thermally meltable epoxy resin cannot be increased so that an obtained fiber-reinforced thermally meltable epoxy resin does not have high mechanical strength.

Examples of the reinforcing fibers to be used in the present invention include organic fibers such as aramid fibers and inorganic fibers such as glass fibers and carbon fibers. Among these reinforcing fibers, carbon fibers and glass fibers are preferred. The reinforcing fibers can be used in the form of a product obtained by knitting or braiding fibers (e.g., a woven fabric, a knitted fabric, or a braided fabric) or a mat (e.g., a chopped strand mat or a filament mat).

Examples of the glass fibers to be used include: continuous fibers such as glass fiber monofilaments, glass fiber strands, glass fiber roving, and glass fiber yarn; and chopped glass fibers such as glass fiber chopped strands and chopped glass fiber roving. Milled glass fibers may also be included.

Also, a product obtained by knitting or braiding glass fibers such as a glass fiber woven fabric, a glass fiber braided fabric, a glass fiber knitted fabric, or a glass fiber non-woven fabric can be used. It is to be noted that the glass fibers may be subjected to surface treatment using a surface treating agent such as an epoxy silane coupling agent or an acrylic silane coupling agent.

The carbon fibers can be divided into three types: "pitch-based carbon fibers" made from coal-tar pitch or petroleum pitch, "PAN-based carbon fibers" made from polyacrylonitrile, and "rayon-based carbon fibers" made from cellulose fibers, and any of these carbon fibers can be used in the present invention.

The mixing ratio of the reinforcing fibers to a molded product varies depending on the type of fibers used. For example, in the case of using glass fibers, the amount of the reinforcing fibers contained in a molded product is preferably in the range of 10 to 75 wt%, more preferably in the range of 25 to 70 wt% with respect to the weight of the molded product. If the amount of the reinforcing fibers is less than 10 wt%, an obtained molded product tends to have poor physical properties, and large warpage or undulation tends to occur in the molded product. On the other hand, if the amount of the reinforcing fibers exceeds 75 wt%, the reinforcing fibers tend to be unimpregnated with a resin. Another type of reinforcing fibers can also be easily mixed in a ratio known to those skilled in the art based on the above mixing ratio.

The compound (A) and the compound (B) can be linearly polymerized by the following polyaddition reaction scheme shown by way of example. Whether or not the compound (A) and the compound (B) have been linearly polymerized can be determined by checking, for example, the solubility in solvents and thermally melting property of an obtained polyaddition product. It is to be noted that the polyaddition product may partially contain a cross-linked structure as long as the object of the present invention is not adversely affected.

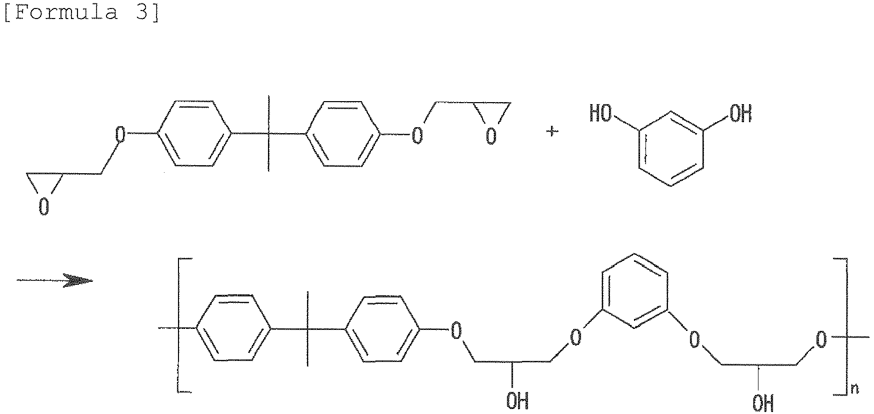

The polyaddition reaction can be carried out in the presence of a polymerization catalyst. Examples of the polymerization catalyst include, in addition to phosphorus-based catalysts, 1,2-alkylenebenzimidazole (TBZ), and 2-aryl-4,5-diphenylimidazole (NPZ) . These catalysts can be used singly or in combination of two or more of them. Among them, phosphorus-based catalysts are preferred from the viewpoint of improving reflowability.

Examples of the phosphorus-based catalysts include dicyclohexylphenylphosphine, tri-o-tolylphosphine, tri-m-tolylphosphine, tri-p-tolylphosphine, cyclohexyldiphenylphosphine, triphenylphosphine, triphenylphosphine-triphenylborane complex, and tri-m-tolylphosphine-triphenylborane complex. Among these phosphorus-based catalyst, tri-o-tolylphosphine and tri-m-tolylphosphine-triphenylborane complex are preferred.

The amount of the polymerization catalyst to be used is usually 0.1 to 10 parts by weight, preferably 0.4 to 6 parts by weight, particularly preferably 1 to 5 parts by weight with respect to 100 parts by weight of the compound (A) from the viewpoint of keeping the ability of the polymerization catalyst to complete polymerization in a short period of time and the pot life of a mixture of the compounds (A) and (B) in good balance.

A mixture of the compounds (A) and (B) and the polymerization catalyst is preferably liquid at room temperature because it is not necessary to heat the mixture in the step of impregnating the reinforcing fibers with the compound (A) and the compound (B), or it is possible to sufficiently reduce the viscosity of the mixture by heating the mixture to the extent that a significant increase in the viscosity of the mixture caused by initiation of polymerization does not occur so that the reinforcing fibers are easily impregnated with the compound (A) and the compound (B). Even when the compound (A) and the compound (B) are each independently solid, they can be used in the present invention by using a two-part liquid mixing device equipped with heatable tanks and static mixers, as long as a mixture of the compound (A), the compound (B), and the polymerization catalyst can have a viscosity of 1,000 mPa·s or less when heated at 200°C or less.

In the present invention, a reaction retardant can also be used. In the step of mixing two liquids and impregnating the reinforcing fibers with the liquids, a resin is often heated because of the necessity to homogeneously liquefy the resin and to reduce the viscosity of the resin as low as possible, and therefore there is a possibility that polymerization reaction is initiated before the impregnation of the reinforcing fibers with the resin is completed, so that the viscosity of the resin is increased, thereby causing poor impregnation of the reinforcing fibers with the resin. In order to prevent such poor impregnation, a reaction retardant which retards reaction during heating carried out for reducing viscosity but does not inhibit polymerization reaction carried out after the completion of impregnation is preferably used. Examples of such a reaction retardant include trialkyl borates such as tri-n-butyl borate, tri-n-octyl borate, and tri-n-dodecyl borate and triaryl borates such as triphenyl borate. These reaction retardants can be used singly or in combination of two or more of them. Among them, tri-n-octyl borate is preferred because it is liquid at room temperature and therefore has excellent miscibility and can significantly retard reaction at 80°C or less.

The reaction retardant is used in such an amount that the amount of boron atoms in a boric acid ester is preferably 0.1 to 2.0 moles, more preferably 0.5 to 1.2 moles, particularly preferably 0.7 to 1.0 mole with respect to 1 mole of phosphorus atoms of the phosphorus-based catalyst from the viewpoints of prolonging the time during which the reinforcing fibers can be impregnated with the resin and allowing polymerization to be completed in a short period of time.

In the present invention, if necessary, one or more additives such as fillers (e.g., organic powders and inorganic powders such as aluminum hydroxide), known flame retardants, and solvents (e. g. , solvents for controlling viscosity) may be further added. Examples of the solvents include ketones such as acetone, methyl ethyl ketone (MEK), methyl isobutyl ketone (MIBK), and cyclohexanone and ethers such as methyl cellosolve and ethylene glycol dibutyl ether. Among these solvents, acetone is preferred because it is easily volatilized during polymerization. The amount of the solvent to be used is preferably 0.1 to 15 parts by weight, more preferably 4 to 8 parts by weight with respect to 100 parts by weight of a resin component. If the amount of the solvent used is too small, phenols are deposited. On the other hand, if the amount of the solvent used is too large, the solvent remains in a resin even after the completion of polymerization so that the physical properties of an obtained fiber-reinforced thermally meltable epoxy resin are significantly poor.

In the polymerization reaction in respect of the present invention, in a case where impregnation with resin and polymerization are carried out in a mold, polymerization reaction is carried out at around the setting temperature of the mold. The temperature of the mold is generally in the range of about 80°C (e.g., in the case of heating with hot water) to 200°C (e.g., in the case of heating with steam or heating with an electric heating device). The range of temperature at which polymerization reaction is carried out varies depending on the kinds of reactive compounds, polymerization catalyst, and reaction retardant used. However, polymerization reaction is usually carried out at 120 to 230°C for about 3 to 60 minutes.

The heat resistance properties such as Tg and melting initiation temperature of a fiber-reinforced thermally meltable epoxy resin molded product obtained in the polymerization reaction step (II) can be controlled by changing the mixing ratio of the compound (A1) and/or the compound (B1). For example, it is possible to allow the molded product to have a melting initiation temperature of preferably higher than 100°C (e.g., 120°C or higher) or a melting initiation temperature of 150°C or higher. It is to be noted that Tg is a temperature at which tan δ shows its peak in measurement of dynamic viscoelasticity, and the melting initiation temperature is measured by differential thermal analysis.

### EXAMPLES

Hereinbelow, the present invention will be described in more detail with reference to the following example, but the following example is merely illustrative and is not intended to limit the present invention.

### Example 1 and Comparative Example 1

First, according to the following Table 1, predetermined amounts (parts by weight) of raw materials were mixed to obtain a mixture of reactive compounds. It is to be noted that polymerization reaction of the reactive compounds did not occur during the preparation of the mixture and storage of the mixture at room temperature. Abbreviations in Table 1 are as follows:
AER260, bisphenol A-type liquid epoxy resin manufactured by Asahi kasei Corporation (epoxy equivalent: 190 g/eq); BCF, biscresol fluorene manufactured by Osaka Gas Co., Ltd. (OH equivalent: 189.3 g/eq);
BPA-M, bisphenol A manufactured by Mitsui Chemicals, Inc. (OH equivalent: 114 g/eq); and
TOTP, tri-o-tolylphosphine manufactured by Hokko Chemical Industry Co., Ltd. (molecular weight: 304).

**Table 1**

| | | Example 1 | Comparative Example 1 |
|---|---|---|---|
| Raw Materials | Equivalent Weight of Functional Group | Amount Added | |
| AER260 | 190 g/eq Epoxy | 100 | 100 |
| BCF | 189.3 g/eq OH | 99.6 | - |
| BPA-M | 114 g/eq OH | - | 60 |
| TOTP | | 4 | 4 |
| Cyclohexanone | | 100 | - |

The thus obtained mixture was fed into a tank for impregnation, and was then kept at 100°C to be completely melted. Then, a glass fiber woven fabric (glass cloth manufactured by Nitto Boseki Co., Ltd. under the trade name of WF230N, thickness: 0.22 mm, weight: 203 g/m², silane-coupling agent-treated) was prepared as reinforcing fibers, and was impregnated with the mixture and then dried at 100°C for 20 minutes to prepare a prepreg containing the unreacted reactive compounds. After drying, 12 sheets of the prepreg were laminated on top of one another in a mold, and contact heating of the prepreg was carried out for 5 minutes by heating the mold to 120°C. After contact heating, the prepreg was taken out of the mold, and then degassing was carried out by using a roller. Then, the prepreg was again placed in the mold, and was pressed at 160°C at a pressure of 100 kg/cm² for 1 hour to carry out polymerization reaction. In this way, a fiber-reinforced thermally meltable epoxy resin molded product having a glass fiber content of 42 wt% was obtained.

In the surface and cross-section of the thus obtained glass fiber-reinforced thermally meltable epoxy resin molded product of the Example 1, cells and the like were not observed. Further, the surface appearance of the molded product of the Example 1 was good.

Next, a flat plate having a size of 300 mm (width) × 300 mm (length) × 4 mm (thickness) was cut from a flat portion of the glass fiber-reinforced thermally meltable epoxy resin molded product (hereinafter, referred to as "thermally meltable FRP") as a sample. Further, specimens for bending test and specimens for dynamic viscoelasticity test were cut from the sample. The viscoelastic properties of the thermally meltable FRP were measured by using the specimens. It is to be noted that the viscoelastic properties of an FRP obtained in the Comparative Example 1 were also measured in the same manner as in the Example 1. A method for measuring viscoelastic properties is as follows.

### Viscoelasticity Test

The viscoelastic properties of the thermally meltable FRP were measured by a dynamic viscoelasticity test according to JIS K7244-5. The specimen had a thickness (h) of 4 mm, a width (b) of 10 mm, and a length (1) of 20 mm. As a testing machine, a dynamic viscoelasticity measuring instrument DMS-6100 (manufactured by Seiko Instruments Inc.) was used. The both ends of the specimen were completely fixed, the center of the specimen was clamped by a clamping width of 5 mm, and a sinusoidal strain was applied to the specimen by bending. The test conditions are as follows: measurement temperature, -50 to 250°C; temperature rise rate, 2°C/min; frequency, 1 Hz.

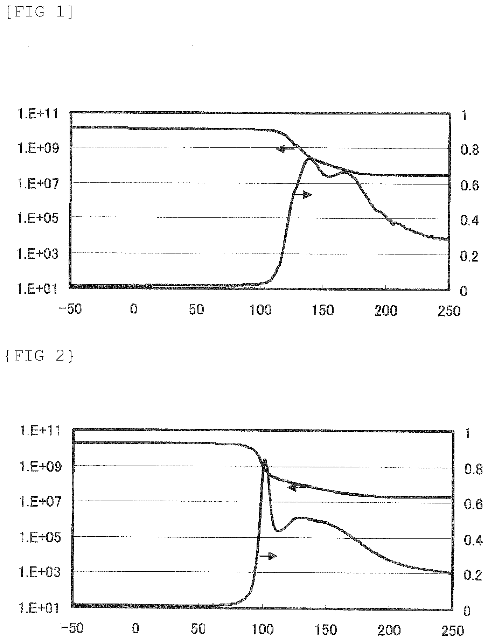

Figs. 1 and 2 show measurement results of storage elastic modulus (E') (shown on the left vertical axis) and tan δ (shown on the right vertical axis) of the Example 1 and Comparative Example 1, respectively. In both of Figs. 1 and 2, the lateral axis indicates temperature (°C).

From the result of temperature dispersion of the loss (tan δ), it was found that the Tg of the FRP of the Example 1 using a compound having a fluorene skeleton reached 139°C, whereas the Tg of the FRP of the Comparative Example 1 not using the compound having a fluorene skeleton was 101°C. It is to be noted that in both the cases of the Example 1 and the Comparative Example 1, tan δ was significantly increased at Tg, and was then slightly lowered at a temperature higher than Tg, but did not again return to its initial value and was kept at a relatively high value. This indicates that the FRP becomes prominent in its viscous property and is melted (reliquefied) at a temperature equal to or higher than the Tg of its matrix material. The FRP was remelted and was therefore easily bent. From the result, it was found that the matrix material of the FRP was a linear polymer not having a cross-linked structure.

### INDUSTRIAL APPLICABILITY

The composite material produced by the method according to the present invention is a thermally meltable epoxy resin composite material that can be melted at a high temperature, and therefore can be applied to various applications requiring heat resistance. This composite material is very advantageous in the industrial field because it can expand the application range of a fiber-reinforced thermally meltable epoxy resin molded product that is fabricable, reusable and recyclable. Examples of the applications of the composite material produced by the method according to the present invention include automobiles such as car bodies, platforms, hoods, bumpers, doors, roofs, seats, seat rails, spoilers, side mirrors, roof spoilers for truck cabs, and bus bodies.

## Claims

1. A method for producing a fiber-reinforced thermally meltable epoxy resin, comprising the steps of:
(I) mixing a compound (A) having two epoxy groups in one molecule and a compound (B) having two phenolic hydroxyl groups in one molecule with reinforcing fibers; and
(II) linearly polymerizing the compounds (A) and (B) mixed with the reinforcing fibers by polyaddition reaction in the presence of a polymerization catalyst,
wherein at least a part of the compound (A) and/or at least a part of the compound (B) are/is a compound having a fluorene skeleton, the compound (A) and the compound (B) are mixed in such a ratio that the number of moles of epoxy groups in the compound (A) is 0.9 to 1.1 times the number of moles of phenolic hydroxyl groups in the compound (B); and the polymerization catalyst is at least one selected from the group consisting of phosphorus-based catalysts, 1,2-alkylenebenzimidazole and 2-aryl-4,5-diphenylimidazole.

2. The production method according to claim 1, wherein in the step (I), the reinforcing fibers are impregnated with the molten compounds (A) and (B).

3. The production method according to claim 1 or 2, wherein the amount of the compound(s) having a fluorene skeleton is 7 mol% or more with respect to the total amount of the compound (A) and the compound (B).

4. The production method according to any one of claims 1 to 3, wherein when the compound (A) having a fluorene skeleton is defined as a compound (A1), the compound (A1) is represented by the following general formula (1), and when the compound (B) having a fluorene skeleton is defined as a compound (B1), the compound (B1) is represented by the following general formula (2): 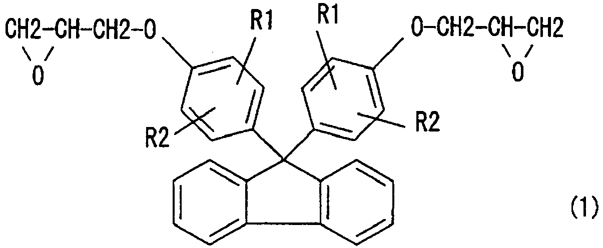 wherein R1 and R2 are the same or different and each represents a hydrogen atom, a C1 to C5 saturated or unsaturated linear or cyclic hydrocarbon group which may have a substituent, or an aryl group which may have a substituent, and two R1s may be the same or different and two R2s may be the same or different; 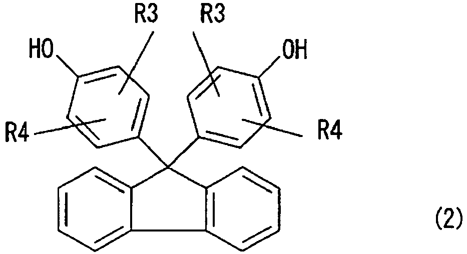 wherein R3 and R4 are the same or different and each represents a hydrogen atom, a C 1 to C5 saturated or unsaturated linear or cyclic hydrocarbon group which may have a substituent, or an aryl group which may have a substituent, and two R3s may be the same or different and two R4s may be the same or different.

5. The production method according to any one of claims 1 to 4, wherein a polymerization product of the monomer (A) and the monomer (B) has a melting initiation temperature of higher than 100°C as measured by differential thermal analysis.

6. The production method according to any one of claims 1 to 5, further comprising using a reaction retardant.

7. The production method according to claim 6, wherein the reaction retardant is at least one selected from the group consisting of trialkyl borates, triarylborates or mixtures thereof.

8. The production method according to claim 6, wherein the polymerization catalyst is a phosphorus-based polymerization catalyst and the reaction retardant is a boric acid ester-based reaction retardant.

9. The production method according to any one of claims 1 to 8, wherein the reinforcing fibers comprise a reinforcing fiber knitted or braided fabric or a reinforcing fiber mat.

10. The production method according to claim 9, wherein the reinforcing fibers are glass fibers.

11. A fiber-reinforcing thermally meltable epoxy resin obtainable by the production method according to any one of claims 1 to 10.

## Patentansprüche

1. Ein Verfahren zur Herstellung eines faserverstärkten thermisch schmelzbaren Epoxidharzes, umfassend die Schritte:
(I) Mischen einer Verbindung (A), welche zwei Epoxidgruppen in einem Molekül aufweist, und einer Verbindung (B), welche zwei phenolische Hydroxylgruppen in einem Molekül aufweist, mit Verstärkungsfasern; und
(II) geradkettiges Polymerisieren der Verbindungen (A) und (B), welche mit den Verstärkungsfasern gemischt sind, durch Polyadditionsreaktion in Gegenwart eines Polymerisationskatalysators,
wobei mindestens ein Teil der Verbindung (A) und/oder mindestens ein Teil der Verbindung (B) eine Verbindung mit einem Fluorengerüst darstellen/darstellt, die Verbindung (A) und die Verbindung (B) in solch einem Verhältnis gemischt werden, dass die Molzahl der Epoxidgruppen in der Verbindung (A) das 0,9- bis 1,1-fache der Molzahl der phenolischen Hydroxylgruppen in der Verbindung (B) beträgt; und der Polymerisationskatalysator mindestens einer ist ausgewählt aus der Gruppe bestehend aus Katalysatoren auf Phosphorbasis, 1,2-Alkylenbenzimidazol und 2-Aryl-4,5-diphenylimidazol.

2. Das Herstellungsverfahren gemäß Anspruch 1, wobei in Schritt (I) die Verstärkungsfasern mit den geschmolzenen Verbindungen (A) und (B) imprägniert sind.

3. Das Herstellungsverfahren gemäß Anspruch 1 oder 2, wobei die Menge der Verbindung(en) mit einem Fluorengerüst 7 Mol-% oder mehr beträgt, bezogen auf die Gesamtmenge der Verbindung (A) und der Verbindung (B).

4. Das Herstellungsverfahren gemäß einem der Ansprüche 1 bis 3, wobei, wenn die Verbindung (A) mit einem Fluorengerüst als eine Verbindung (A1) definiert ist, die Verbindung (A1) durch die folgende allgemeine Formel (1) dargestellt ist, und wenn die Verbindung (B) mit einem Fluorengerüst als Verbindung (B1) definiert ist, die Verbindung (B1) durch die folgende allgemeine Formel (2) dargestellt ist: 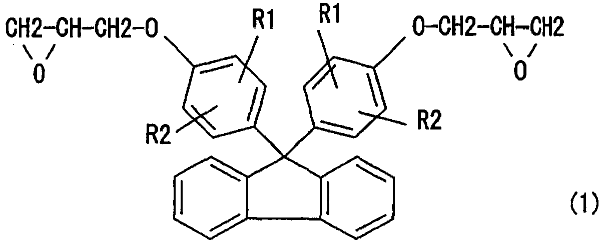 wobei R1 und R2 gleich oder verschieden sind und jeweils ein Wasserstoffatom, eine C1 bis C5, gesättigte oder ungesättigte, lineare oder cyclische Kohlenwasserstoffgruppe, welche einen Substituenten aufweisen kann, oder eine Arylgruppe, welche einen Substituenten aufweisen kann, darstellen, und zwei R1 gleich oder verschieden sein können und zwei R2 gleich oder verschieden sein können; 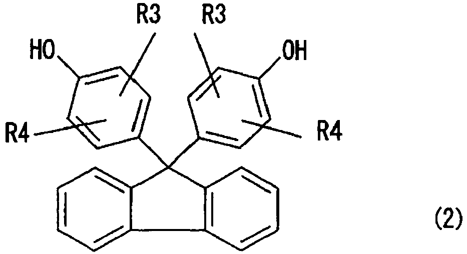 wobei R3 und R4 gleich oder verschieden sind und jeweils ein Wasserstoffatom, eine C1 bis C5, gesättigte oder ungesättigte, lineare oder cyclische Kohlenwasserstoffgruppe, welche einen Substituenten aufweisen kann, oder eine Arylgruppe, welche einen Substituenten aufweisen kann, darstellen, und zwei R3 gleich oder verschieden sein können und zwei R4 gleich oder verschieden sein können.

5. Das Herstellungsverfahren gemäß einem der Ansprüche 1 bis 4, wobei ein Polymerisationsprodukt des Monomers (A) und des Monomers (B) eine Anfangsschmelztemperatur von mehr als 100°C aufweist, gemessen durch Differentialthermoanalyse.

6. Das Herstellungsverfahren gemäß einem der Ansprüche 1 bis 5, ferner umfassend die Verwendung eines Reaktionsverzögerungsmittels.

7. Das Herstellungsverfahren gemäß Anspruch 6, wobei das Reaktionsverzögerungsmittel mindestens eines ist ausgewählt aus der Gruppe bestehend aus Trialkylboraten, Triarylboraten oder Gemischen davon.

8. Das Herstellungsverfahren gemäß Anspruch 6, wobei der Polymerisationskatalysator ein Polymerisationskatalysator auf Phosphorbasis ist und das Reaktionsverzögerungsmittel ein Reaktionsverzögerungsmittel auf Basis von Borsäureester ist.

9. Das Herstellungsverfahren gemäß einem der Ansprüche 1 bis 8, wobei die Verstärkungsfasern ein Gestrick oder geflochtenes Gewebe mit Verstärkungsfasern oder eine Verstärkungsfasermatte umfassen.

10. Das Herstellungsverfahren gemäß Anspruch 9, wobei die Verstärkungsfasern Glasfasern sind.

11. Ein faserverstärktes thermisch schmelzbares Epoxidharz, erhältlich durch das Herstellungsverfahren gemäß einem der Ansprüche 1 bis 10.

## Revendications

1. Méthode de production d'une résine époxy thermofusible renforcée par fibres, comprenant les étapes suivantes :
(I) mélanger un composé (A) ayant deux groupes époxy par molécule et un composé (B) ayant deux groupes hydroxyle phénoliques par molécule avec des fibres de renfort ; et
(II) polymériser linéairement les composés (A) et (B) mélangés aux fibres de renfort par une réaction de polyaddition en présence d'un catalyseur de polymérisation,
dans laquelle au moins une partie du composé (A) et/ou au moins une partie du composé (B) sont/est un composé ayant un squelette fluorène, le composé (A) et le composé (B) sont mélangés dans un rapport tel que le nombre de moles de groupes époxy dans le composé (A) est de 0,9 à 1,1 fois le nombre de moles de groupes hydroxyle phénoliques dans le composé (B) ; et le catalyseur de polymérisation est au moins un catalyseur choisi dans le groupe constitué par les catalyseurs à base de phosphore, le 1,2-alkylènebenzimidazole et le 2-aryle-4,5-diphénylimidazole.

2. Méthode de production selon la revendication 1, dans laquelle dans l'étape (I), les fibres de renfort sont imprégnées avec les composés (A) et (B) à l'état fondu.

3. Méthode de production selon la revendication 1 ou 2, dans laquelle la quantité du ou des composés ayant un squelette fluorène est de 7 % en mol ou plus par rapport à la quantité totale du composé (A) et du composé (B).

4. Méthode de production selon l'une quelconque des revendications 1 à 3, dans laquelle quand le composé (A) ayant un squelette fluorène est défini comme composé (A1), le composé (A1) est représenté par la formule générale (1) suivante, et quand le composé (B) ayant un squelette fluorène est défini comme composé (B1), le composé (B1) est représenté par la formule générale (2) suivante : 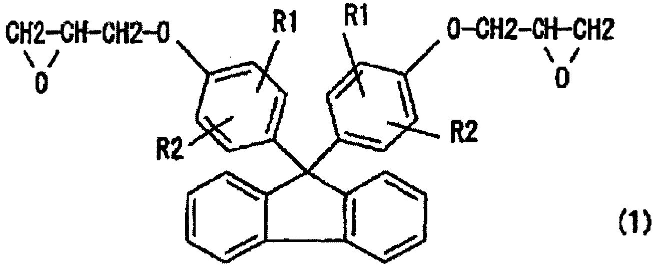 dans laquelle R1 et R2 sont identiques ou différents et chacun représente un atome d'hydrogène, un groupe hydrocarbure C1 à C5 linéaire ou cyclique, saturé ou non qui peut porter un substituant, ou un groupe aryle qui peut porter un substituant, et les deux R1 peuvent être identiques ou différents et les deux R2 peuvent être identiques ou différents ; 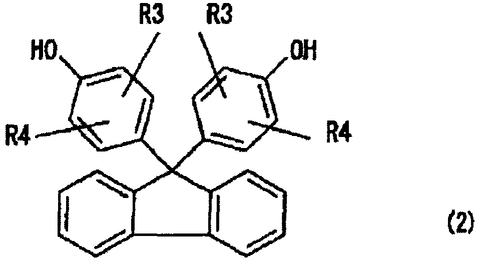 dans laquelle R3 et R4 sont identiques ou différents et chacun représente un atome d'hydrogène, un groupe hydrocarbure C1 à C5 linéaire ou cyclique, saturé ou non qui peut porter un substituant, ou un groupe aryle qui peut porter un substituant, et les deux R3 peuvent être identiques ou différents et les deux R4 peuvent être identiques ou différents.

5. Méthode de production selon l'une quelconque des revendications 1 à 4, dans laquelle un produit de polymérisation du monomère (A) et du monomère (B) présente une température d'initiation de fusion, mesurée par analyse thermique différentielle, supérieure à 100 °C.

6. Méthode de production selon l'une quelconque des revendications 1 à 5, comprenant en outre l'utilisation d'un retardateur de réaction.

7. Méthode de production selon la revendication 6, dans laquelle le retardateur de réaction est au moins un composé choisi dans le groupe constitué par les borates de trialkyle, les borates de triaryle ou leurs mélanges.

8. Méthode de production selon la revendication 6, dans laquelle le catalyseur de polymérisation est un catalyseur de polymérisation à base de phosphore et le retardateur de réaction est un retardateur de réaction à base d'ester d'acide borique.

9. Méthode de production selon l'une quelconque des revendications 1 à 8, dans laquelle les fibres de renfort comprennent une étoffe tricotée ou tressée de fibres de renfort ou une nappe de fibres de renfort.

10. Méthode de production selon la revendication 9, dans laquelle les fibres de renfort sont des fibres de verre.

11. Résine époxy thermofusible renforcée par fibres susceptible d'être obtenue par la méthode de production selon l'une quelconque des revendications 1 à 10.
